# EUROPÄISCHE PATENTSCHRIFT

(11) **EP 1 371 073 B1**
(45) Veröffentlichungstag und Bekanntmachung des Hinweises auf die Patenterteilung: **03.03.2010**
(21) Anmeldenummer: 02701196.4
(22) Anmeldetag: 17.01.2002
(51) Int. Cl.: H01G 9/00

(54) **VERFAHREN ZUR HERSTELLUNG EINER SCHICHTELEKTRODE FÜR ELEKTROCHEMISCHE BAUELEMENTE UND SCHICHTELEKTRODE**
METHOD FOR PRODUCING A COMPOSITE ELECTRODE FOR ELECTROCHEMICAL COMPONENTS, AND A COMPOSITE ELECTRODE
PROCEDE DE FABRICATION D'UNE ELECTRODE COMPOSITE POUR DES COMPOSANTS ELECTROCHIMIQUES, ET ELECTRODE COMPOSITE AINSI OBTENUE

(30) Priorität: 23.03.2001 DE 10114185
(43) Veröffentlichungstag der Anmeldung: 17.12.2003
(73) Patentinhaber: EPCOS AG, 81669 München (DE)
(72) Erfinder: MICHEL, Hartmut, 89520 Heidenheim (DE); WEBER, Christoph, 89522 Heidenheim (DE); SCHOCH, Klaus, 89564 Nattheim (DE)
(74) Vertreter: Epping - Hermann - Fischer
(86) Internationale Anmeldenummer: PCT/DE2002/000131
(87) Internationale Veröffentlichungsnummer: WO 2002/078025

(56) Entgegenhaltungen:
- EP-A- 0 886 288
- EP-A- 0 989 571
- US-A- 5 777 428
- PATENT ABSTRACTS OF JAPAN vol. 014, no. 257 (E-0936), 4. Juni 1990 (1990-06-04) -& JP 02 078213 A (MATSUSHITA ELECTRIC IND CO LTD), 19. März 1990 (1990-03-19)

## Beschreibung

Die Erfindung betrifft ein Verfahren zur Herstellung einer Schichtelektrode für elektrochemische Bauelemente, wobei eine Schicht mit einem Metall verbunden wird. Ferner betrifft die Erfindung eine Schichtelektrode für elektrochemische Bauelemente.

Aus der Druckschrift EP 0 786 142 B1 sind elektrochemische Bauelemente in Form von elektrochemischen Doppelschichtkondensatoren bekannt, bei denen als Schichtelektroden Kohlenstoffschichten verwendet werden. Um den Kohlenstoff des Kohlenstofftuchs mit einer Aluminiumelektrode kontaktieren zu können, wird zunächst mittels eines Lichtbogenverfahrens das Kohlenstofftuch mit flüssigem Aluminium beschichtet. Dadurch wird erreicht, daß das Aluminium möglichst tief in die Fasern des Kohlenstofftuchs eindringt, wodurch ein guter elektrischer Kontakt hergestellt werden kann.

Dieses Verfahren hat allerdings den Nachteil, daß das heiße Aluminium leicht an der Luft oxidiert und durch die dadurch entstehende Aluminiumoxidschicht der elektrische Kontaktwiderstand zwischen der Schicht und dem Aluminium-Metall erhöht wird.

Desweiteren hat das bekannte Verfahren der Herstellung einer Schichtelektrode den Nachteil, daß das Lichtbogenverfahren eine hohe mechanische Stabilität der Schicht erfordert, um ein Zerreißen der Schicht zu verhindern. Um bei einem elektrochemischen Doppelschicht-Kondensator einen möglichst niedrigen ohmschen Widerstand zwischen Kohlenstoffmaterial undden Strom ab- beziehungsweise -zuleitendem Metall zu erreichen, muß ein großflächiger direkter Kontakt zwischen dem Kohlenstoffmaterial und dem Metall erzeugt werden.

Eine hohe mechanische Stabilität der Schicht bedeutet, daß die Schicht mit einer relativ großen Dicke ausgeführt sein muß, wodurch die für den Kontakt mit einer Metallelektrode zur Verfügung stehende Fläche reduziert wird, was eine Erhöhung des ohmschen Widerstands des Kondensators nach sich zieht. Darüber hinaus erfordern stabile Kohlenstoffschichten die Verwendung von teuren, stabilen Fasermaterialien, was erhöhte Rohstoffkosten bedeutet.

Im weiteren Verlauf der Fertigung wird eine beschichtete Schicht auf der Ober- beziehungsweise Unterseite einer Aluminiumfolie positioniert. Diese Aluminiumfolie dient als Ableiterelektrode für den Kondensator. Diese Anordnung aus mehreren Teilen (Folie und Schichten) muß versetzungsfrei beim Aufbau eines Kondensatorwickels verarbeitet werden, um Kurzschlüsse am Rand der Folie sowie eine Beschädigung der Kohlenstoffschichten zu verhindern.

Desweiteren hat das bekannte Verfahren den Nachteil, daß es eine Vielzahl von einzelnen Arbeitsschritten erfordert. Das durch das Lichtbogenverfahren in die Schicht eingebrachte Aluminium vergrößert die Schichtdicke der Schicht, wodurch die Volumenausnutzung des Kondensators verschlechtert wird.

Aus EP 0 989 571 A1 ist ein Elektrodenmetalmaterial bekannt, welches ein Ventilmetallmäterial sowie mehrere in der Oberfläche des Ventilmetalmaterials angeordnete Kohlenstoffpartikel aufweist.

Ziel der vorliegenden Erfindung ist es daher, ein Verfahren zur Herstellung einer Schichtelektrode anzugeben, wobei Schichten mit geringer mechanischer Stabilität verarbeitet werden können und das einfach durchzuführen ist.

Dieses Ziel wird durch das erfindungsgemäße Verfahren gemäß Patentanspruch 1 erreicht. Weitere Ausgestaltungen der Erfindung und eine mit dem erfindungsgemäßen Verfahren hergestellte Schichtelektrode sind den weiteren Patentansprüchen zu entnehmen.

Die Erfindung gibt ein Verfahren zur Herstellung einer Schichtelektrode für elektrochemische Bauelemente mit einer auf einer Metallfolie aufliegenden Schicht an, wobei zur Herstellung einer Verbindung zwischen der Metallfolie und der Schicht ein Flächenabschnitt der Schicht über einen Teil der Dicke der Schicht in die Metallfolie eingepreßt wird und wobei die Metallfolie während des Einpressens erweicht wird.

Das erfindungsgemäße Verfahren verzichtet auf das Aufbringen von flüssigem Aluminium im Lichtbogenverfahren auf die Schicht, wodurch die mechanische Belastung für die Schicht reduziert ist. Dadurch können Schichten mit geringer mechanischer Stabilität und somit entweder Schichten mit kleinerer Schichtdicke oder aus billigeren Rohstoffen hergestellte Schichten verwendet werden.

Die Verwendung dünnerer Schichten hat den Vorteil, daß eine in das Bauelement einzubringende Gesamtmenge an Schichtmaterial, z.B. Kohlenstoff, auf eine größere Anzahl von Elektrodenschichten verteilt werden kann, wodurch die für die Kontaktierung der Schicht mit einer Elektrode zur Verfügung stehende Fläche vergrößert wird. Dadurch sinkt der ohmsche Widerstand des zu realisierenden Bauelements und damit dessen Verluste in vorteilhafter Weise.

Durch den Verzicht auf das Lichtbogenverfahren ist auch die Gefahr der Oxidation des Metalls reduziert, wodurch der ohmsche Widerstand der Schichtelektrode reduziert werden kann.

Da auf das aufgesprühte Aluminium verzichtet wird, kann die Schichtdicke der Schichtelektrode reduziert werden, wodurch die Volumenausnutzung in dem zu realisierenden Bauelement ansteigt.

Die durch den Verzicht auf das aufgesprühte Aluminium beziehungsweise durch die Verwendung dünnerer Schichten eingesparte Schichtdicke kann aber auch durch Verwendung von dickeren Aluminiumfolien ausgeglichen werden, wobei im Endeffekt die Schichtdicke der Schichtelektrode gleich bleibt. Es wird jedoch der ohmsche Widerstand der Schichtelektrode beziehungsweise des zu realisierenden Bauelements reduziert wird, da dickere Aluminiumfolien eine niederohmigere Verbindung zu einem Außenanschluß des Bauelements erlauben.

Desweiteren hat das erfindungsgemäße Verfahren den Vorteil, daß es sehr wenige Prozeßschritte aufweist und dadurch kostengünstig und einfach zu realisieren ist.

Das Einpressen der Schicht in die erweichte Metallfolie sorgt darüber hinaus für einen optimalen elektrischen Kontakt zwischen Schicht und Metallfolie.

In einer vorteilhaften Ausführungsform der Erfindung kann als Schicht eine elementaren Kohlenstoff enthaltende Schicht verwendet werden, so wie es beispielsweise für die Realisierung elektrochemischer Doppelschichtkondensatoren notwendig ist.

Darüber hinaus kann als Metallfolie eine Aluminiumfolie verwendet werden, wie sie beim Aufbau von elektrochemischen Doppelschichtkondensatoren üblich ist.

Die Erfindung kann realisiert werden, indem ein Schichtstapel mit einer über einer Metallfolie liegenden Schicht zwischen einem Preßwerkzeug und einem Anschlag liegt und wobei der Schichtstapel durch das Preßwerkzeug gegen den Anschlag gepreßt wird.

Darüber hinaus ist ein Verfahren vorteilhaft, wobei ein Schichtstapel mit einer über einer Metallfolie liegenden Schicht zwischen einem Preßwerkzeug und einem Anschlag liegt und wobei das Preßwerkzeug den Schichtstapel gegen den Anschlag preßt.

In einer Ausführungsform der Erfindung kann das Preßwerkzeug mit einer glatten Oberfläche versehen sein, die gegen die ebenfalls glatte Oberfläche des Anschlags gepreßt wird. Dadurch können die eingepreßten Flächenabschnitte der Schicht zusammenhängend hergestellt werden, wodurch die Schicht über seine gesamte Fläche in die Metallfolie eingepreßt wird. Dadurch kann insbesondere eine innige Verbindung der Metallfolie mit der Schicht und entsprechend einer niedriger ohmscher Widerstand der Schichtelektrode verwirklicht werden. Die glatten Oberflächen können dabei eben oder gekrümmt sein.

Bei der Realisierung eines elektrochemischen Doppelschicht-Kondensators trägt nur der Anteil der Kohlenstoffschicht zur Kapazität bei, der nicht von Metall umgeben ist. Dementsprechend kann es vorteilhaft sein, die Schicht nur abschnittsweise in die Metallfolie einzupressen. Die frei auf der Metallfolie aufliegenden Abschnitte der Schicht können so voll zur Kapazität des Bauelements beitragen. Eine solche Schichtelektrode kann hergestellt werden, indem eine Vertiefungen aufweisende Oberfläche des Preßwerkzeugs gegen einen Anschlag gepreßt wird, dessen Oberfläche so gestaltet ist, daß an den Stellen der Vertiefungen die Schicht nicht in die Metallfolie eingepreßt wird.

Desweiteren ist es besonders vorteilhaft, wenn die Metallfolie in der Nähe des Preßwerkzeugs bzw. des einzupressenden Flächenabschnitts erweicht wird. Dadurch kann erreicht werden, daß die thermische Belastung und auch die mechanische Belastung der Aluminiumfolie möglichst gering gehalten wird, was die Verwendung dünnerer Aluminiumfolien erlaubt. Dadurch kann die Volumenausnutzung eines Kondensators verbessert werden.

Die Erweichung der Metallfolie kann beispielsweise durch ein erwärmtes Preßwerkzeug und/oder Anschlag erreicht werden.

Eine weitere Möglichkeit, die Metallfolie zu erweichen, besteht darin, einen elektrischen Strom senkrecht zur Folie durch die Folie fließen zu lassen. Ein solcher elektrischer Strom könnte beispielsweise durch Anlegen entsprechender elektrischer Potentiale an Preßwerkzeug und Anschlag verursacht werden. Preßwerkzeug und Anschlag müßten in diesem Fall elektrisch leitfähig sein.

Desweiteren ist es auch möglich, das Erweichen der Folie durch Einstrahlen von Ultraschall zu verwirklichen. Zu diesem Zweck ist es vorteilhaft, ein Preßwerkzeug beziehungsweise einen Anschlag zu verwenden, der Ultraschall aussenden kann.

Um eine noch innigere Verbindung der Schicht mit einem Metall zu erzielen, kann vor dem Einpressen der Schicht in die Metallfolie ein Metallpulver auf den einzupressenden Flächenabschnitt aufgebracht werden. Aufgrund seiner kleinen Strukturgröße wird das Metallpulver besonders leicht in die Schicht eindringen und so einen guten elektrischen Kontakt zwischen der Metallfolie und der Schicht herstellen.

Desweiteren ist es vorteilhaft, wenn eine Metallfolie auf beiden Seiten mit zwei deckungsgleichen Schichten bedeckt und diese Schichten mit dem erfindungsgemäßen Verfahren mit der Metallfolie verbunden werden.

Dadurch kann eine Metallfolie als Ableitungselektrode für zwei Schichten wirksam werden, wodurch die Schichtdicke der Schichtelektrode optimal ausgenutzt wird.

In einer weiteren, vorteilhaften Ausführungsform der Erfindung kann als Preßwerkzeug eine zylinderförmige sich um die Zylinderachse drehende Rolle verwendet wird, die auf dem Schichtstapel abrollt, womit kontinuierlich Flächenabschnitte der Schicht in die Metallfolie einpreßt werden.

In einer weiteren Ausführungsform der Erfindung weist der Schichtstapel die Form eines Bands aufweist, und es wird als Preßwerkzeug ein quer zur Schicht verfahrbarer Stempel verwendet. Es werden die folgenden Schritte durchgeführt:
a) Pressen des Stempels und des dazwischenliegenden Längsabschnitts des Bands gegen einen Anschlag
b) Bewegen des Stempels zur Freigabe des Bandes
c) Bewegen des Bands in Längsrichtung mittels einer Bandtransporteinrichtung.

Dadurch wird ein diskontinuierliches Verfahren zur Verfügung gestellt, das insbesondere für die abschnittsweise Fertigung von Schichtelektroden geeignet ist.

Um eine Oxidation der Metallfolie weitgehend zu verhindern, kann in einer vorteilhaften Ausführungsform der Erfindung die Herstellung der Verbindung zwischen der Schicht und der Metallfolie bei einem gegenüber der Umgebungsatmosphäre reduzierten Sauerstoffpartialdruck stattfinden. Eine weitere Verminderung der Oxidation kann erreicht werden, indem das erfindungsgemäße Verfahren in Inertgasatmosphäre oder im Vakuum durchgeführt wird.

Das Verfahren zur Herstellung einer Schichtelektrode kann insbesondere mit Metallfolien einer Dicke zwischen 30 und 150 µm geführt werden. Solche Metallfolien erlauben die Herstellung von Anschlußbändchen, die eine hohe Stromtragfähigkeit aufweisen.

Bei dem erfindungsgemäßen Verfahren wird ferner vorzugsweise eine Schicht verwendet, das eine Dicke zwischen 100 und 500 µm aufweist. Solche Schichten sind relativ dünn, so daß die Anzahl der Schichtelektroden pro Volumen, beispielsweise in einem Kondensator, erhöht werden kann, wodurch die zur Kontaktierung der Schichten zur Verfügung stehende Fläche steigt. Dadurch sinkt gleichzeitig der ohmsche Widerstand des herzustellenden Bauelements in vorteilhafter Weise ab.

Üblicherweise ist die für elektrochemische Bauelemente geeignete Schicht kohlenstoffhaltig. Es kann als Kohlenstoffpapier, Kohlenstoffvlies, Kohlenstofftuch oder auch als Kohlenstofffilz ausgeführt sein.

Darüber hinaus eignet sich für die Schicht auch eine Vielzahl von Fasern, die alle wenigstens abschnittsweise in einer Vorzugsrichtung nebeneinander verlaufen und die durch Haftung miteinander verbunden sind.

Eine solche Schicht hat den Vorteil, daß durch die in einer einzigen Vorzugsrichtung nebeneinander verlaufenden Fasern auf das Verweben von Fasern oder Fäden, wie es z. B. bei Tüchern der Fall ist, verzichtet werden kann. Dadurch ist die Schicht kostengünstig herstellbar. Da die Fasern darüber hinaus durch Haftung miteinander verbunden sind, ist das Übereinanderlegen und miteinander Verweben von Fasern zur Herstellung des Zusammenhalts der Elemente der Schicht nicht mehr notwendig, wodurch es möglich wird, wesentlich geringere Schichtdicken für die Schicht, nämlich Schichtdicken zwischen 10 und 500 µm, zu realisieren.

Insbesondere können die Fasern aktivierte Kohlenstofffasern sein, die als Strang (auch bekannt als engl. "tow") vorliegen.

Die Haftung der Fasern untereinander kann beispielsweise erzeugt werden, indem ein Strang von Fasern von Nadeln mit Widerhaken quer zur Faserrichtung durchstochen wird. Nach dem Wiederherausziehen derartiger Nadeln verlaufen einige Faserabschnitte abweichend von der Vorzugsrichtung und sind miteinander verhakt. Dadurch wird der mechanische Zusammenhalt innerhalb der Schicht hergestellt. Der Anteil der von der Vorzugsrichtung abweichende Faserabschnitte aufweisenden Fasern beträgt allerdings maximal 20 %, so daß der Faserstrang sich deutlich von einem Vlies unterscheidet, wo die einzelnen Fasern keinerlei Vorzugsrichtung aufweisen.

In einer weiteren Ausführungsform der Schicht kann eine Anzahl von Fasern miteinander verseilt sein und somit ein Garn bilden. Diese Ausführungsform der Schicht hat den Vorteil, daß der mechanische Zusammenhalt quer zur Vorzugsrichtung im Vergleich zu den nicht verseilten Fasern verbessert ist.

Die genannte Ausführung der Schicht hat desweiteren den Vorteil, daß sie eine gegenüber miteinander verwobenen Fasern eine erhöhte Materialdichte ermöglicht, wodurch mit der Schicht hergestellte elektrochemische Doppelschichtkondensatoren eine erhöhte Kapazität aufweisen können.

Auch bei den zu einem Garn miteinander verseilten Fasern kann die Haftung der Garne und mithin der die Garne bildenden Fasern untereinander durch abweichend von der Vorzugsrichtung verlaufende Faserabschnitte, die miteinander verhakt sind, realisiert werden.

Eine weitere Möglichkeit, den mechanischen Zusammenhalt der Fasern herzustellen, besteht darin, die Fasern quer zur Faserrichtung mittels eines Nähfadens miteinander zu vernähen. Als Fasern werden vorzugsweise Kunststoffe verwendet, die durch Pyrolyse (auch bekannt als Karbonisieren) sowie anschließendes Aktivieren der Oberfläche zu Kohlenstofffasern umgewandelt werden. Das Vernähen der Fasern mit einem Nähfaden kann entweder vor der Pyrolyse und dem Aktivieren des Kunststoff-Rohmaterials erfolgen oder aber auch erst nach der Aktivierung. Als Materialien für den Nähfaden sind sämtliche Materialien geeignet, die die elektrischen Eigenschaften des elektrochemischen Bauelements nicht verschlechtern. Für den Fall, daß das elektrochemische Bauelement ein elektrochemischer Doppelschichtkondensator ist, kommen beispielsweise als Nähfaden Polypropylen, Polyethylen oder auch Teflon in Betracht.

Um die Schichtdicke der Schicht nicht unnötig zu erhöhen, werden vorzugsweise Nähfäden mit einer Dicke zwischen 10 µm und 50 µm verwendet. Der Nähfaden kann aus einer einzelnen Faser oder auch aus einem Garn bestehen.

In einer weiteren Ausführungsform der Schicht kann der Zusammenhalt der Fasern innerhalb der Schicht auch dadurch gefördert werden, daß auf der Oberfläche der Schicht stellenweise ein die Haftung zwischen den Fasern vermittelndes Material aufgebracht ist. Ebenso kann das die Haftung der zwischen den Fasern vermittelnde Material stellenweise in die Schicht eingebracht werden.

Dafür sind sämtliche Materialien geeignet, die die elektrischen Eigenschaften des elektrochemischen Bauelements nicht verschlechtern. Im Falle eines elektrochemischen Doppelschichtkondensators sind insbesondere Materialien geeignet, die gegenüber den in elektrochemischen Doppelschichtkondensatoren verwendeten Elektrolyten inert sind. Zur Stabilisierung der Schicht kommt es daher beispielsweise in Betracht, als Material Kohlenstoff in die Schicht oder auf deren Oberfläche mittels Gasphasenabscheidung ein- beziehungsweise aufzubringen. Mittels Gasphasenabscheidung können aber auch weitere Materialien, insbesondere Metalle, wie zum Beispiel Aluminium oder Kupfer, auf oder in die Schicht gebracht werden.

Weiterhin läßt sich der Zusammenhalt der Fasern in der Schicht durch Polymerzusätze erzeugen beziehungsweise herstellen. Mögliche Polymerzusätze sind zum Beispiel Polyethylen, Polypropylen, Polyvinyldifluorid und Tetrafluorpolyethylen. Die Polymerzusätze werden vorzugsweise mit einem Gewichtsanteil zwischen 2 und 20 % bezogen auf den Kohlenstoffgehalt der Schicht zugesetzt.

Als Rohmaterial für die Fasern können besonders vorteilhaft Kunststoffe verwendet werden, die C₆-Ringe enthalten. Diese Kunststoffe können durch Erhitzen unter Luftausschluß beziehungsweise in einer Atmosphäre mit geringem Sauerstoffgehalt pyrolysiert werden, so daß sie sich nahezu vollständig in Kohlenstoff umwandeln. Dieser Vorgang ist auch als Karbonisieren bekannt. Im Anschluß an das Karbonisieren der Fasern kann die Oberfläche der Fasern durch Ätzprozesse aktiviert werden. Die Ätzung kann durch Gasbehandlung zum Beispiel mittels CO₂ oder H₂O erfolgen, sowie chemisch oder elektrochemisch. Durch Aktivierung der Fasern werden die Oberflächen der Fasern stark vergrößert. So kann beispielsweise aus einer spezifischen Oberfläche von 100 m²/g eine spezifische Oberfläche von 3000 m²/g erzeugt werden.

Beispielsweise können als Rohmaterialien für die Fasern Phenolaldehydfasern, Zellstoffasern, Pech, Polyvinylalkohol und seine Derivate oder auch Polyacrylnitril verwendet werden.

Es ist desweiteren vorteilhaft, Fasern mit einer Dicke zwischen 5 und 50 µm zu verwenden, da mit solchen Fasern die Herstellung von dünnen Schichten mit einer Dicke zwischen 5 und 500 µm erleichtert wird. Bei der Verwendung sehr dünner Fasern können gegebenenfalls auch mehrere Fasern übereinander verwendet werden, um die Schicht zu bilden. Bei der Verwendung mehrerer Fasern übereinander hat die daraus resultierende Schicht den Vorteil einer erhöhten mechanischen Stabilität. Demgegenüber ist es jedoch auch möglich, daß die Schicht lediglich aus einer einzigen Faserlage besteht. Dadurch kann dann die bei gegebener Faserstärke dünnstmögliche Schicht hergestellt werden.

Darüber hinaus gibt die Erfindung eine Schichtelektrode für ein elektrochemisches Bauelement an, bei der ein Flächenabschnitt einer Schicht, das auf einer Metallfolie aufliegt, in die Metallfolie eingepreßt ist. Eine solche Schichtelektrode hat die bereits bei der Beschreibung des erfindungsgemäßen Verfahrens genannten Vorteile. Insbesondere hat sie den Vorteil, daß sie dünner als herkömmliche Schichtelektroden ausgeführt werden kann und daß durch den Verzicht auf die Abscheidung von Aluminium mittels eines Lichtbogenverfahrens die Oxidation des Aluminiums vermindert und damit auch der ohmsche Widerstand der Schichtelektrode in vorteilhafter Weise reduziert werden kann.

Dabei kann die auf der Metallfolie aufliegende Schicht ganzflächig in die Metallfolie eingepreßt sein. Es können aber auch nur Flächenabschnitte der Schicht, die durch frei auf der Metallfolie aufliegende Flächenabschnitte voneinander getrennt sind, in die Metallfolie eingepreßt sein.

Im folgenden wird die Erfindung anhand von Ausführungsbeispielen und den dazugehörigen Figuren näher erläutert.

Figur 1 zeigt beispielhaft eine Anordnung zur Durchführung des erfindungsgemäßen Verfahrens in einem schematischen Querschnitt.

Figur 2 zeigt beispielhaft eine erfindungsgemäße Schichtelektrode im schematischen Querschnitt.

Figur 3 zeigt beispielhaft eine erfindungsgemäße Schichtelektrode in Draufsicht.

Figur 4 zeigt ein über einem Anschlag liegendes Preßwerkzeug im schematischen Querschnitt.

Figur 5 zeigt eine mit einem Preßwerkzeug gemäß Figur 4 hergestellte Schichtelektrode in Draufsicht.

Figur 6 zeigt beispielhaft ein weiteres Preßwerkzeug und einen dazugehörigen Anschlag.

Figur 7 zeigt beispielhaft eine mit Preßwerkzeug gemäß Figur 6 hergestellte Schichtelektrode in Draufsicht.

Figur 8 zeigt beispielhaft eine weitere Anordnung zur Durchführung des erfindungsgemäßen Verfahrens im schematischen Querschnitt.

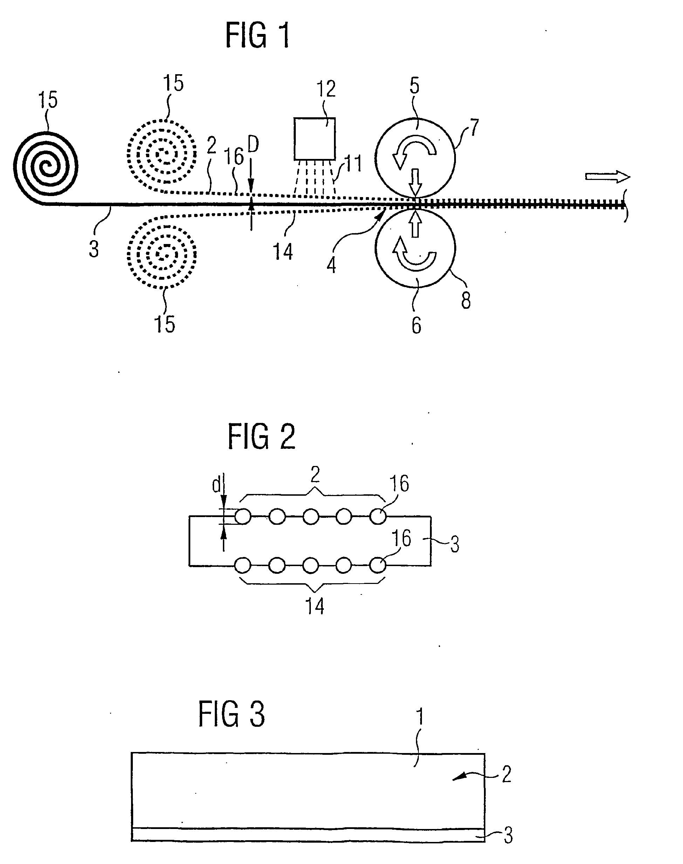

Figur 1 zeigt eine Anordnung zur Durchführung des erfindungsgemäßen Verfahrens. Sie weist ein Preßwerkzeug 5 auf, das in Form einer zylinderförmigen Walze ausgeführt ist. Dem Preßwerkzeug 5 gegenüberliegend ist ein Anschlag 6 angeordnet, der ebenfalls in Form einer zylinderförmigen Walze ausgeführt ist. Das Preßwerkzeug 5 und der Anschlag 6 drehen sich um die jeweilige Zylinderachse mit entgegengesetztem Drehsinn.

Zwischen dem Preßwerkzeug 5 und dem Anschlag 6 verläuft ein Band, das aus drei einen Schichtstapel 4 bildenden übereinanderliegenden Teilbändern besteht. Dabei ist zu beiden Seiten einer Metallfolie 3, die in dem in Figur 1 gezeigten Beispiel eine Aluminiumfolie mit einer Dicke von 100 µm ist, eine Schicht 2 beziehungsweise eine weitere Schicht 14 angeordnet. Die Schichten 2, 14 sowie die Metallfolie 3 weisen die Form von Bändern auf, die von Rollen 15 abgewickelt werden.

Die in Form eines Schichtstapels 4 vorliegenden Bänder werden durch die synchron laufenden zylinderförmigen Rollen, die gegeneinander einen Druck ausüben, in einer Längsrichtung (vgl. Pfeil) transportiert. An der engsten Stelle zwischen den Rollen wirkt dabei ein derart hoher Druck auf die Schichten 2, 14, daß die Schichten 2, 14 in die Metallfolie 3 eingepreßt werden.

Dazu ist jedoch erforderlich, daß die Metallfolie 3 aufgeweicht wird. Dies geschieht bei der in Figur 1 gezeigten Anordnung dadurch, daß das Preßwerkzeug 5 und der Anschlag 6 auf eine Temperatur zwischen 660°C und 750°C aufgeheizt sind. Die im Preßwerkzeug 5 beziehungsweise Anschlag 6 enthaltene Wärme kann an der Engstelle zwischen Preßwerkzeug 5 und Anschlag 6 ohne größere Verluste in die Metallfolie 3 geleitet werden. Da die Metallfolie 3 eine Aluminiumfolie ist, besitzt sie einen Schmelzpunkt von etwa 660°C. Ein leichtes Überschreiten dieser Schmelztemperatur durch die beiden Rollen, die gegen die Aluminiumfolie drücken, ist unkritisch, da ein auf der Aluminiumfolie in jedem Fall vorhandenes Aluminiumoxid die Form der Folie im wesentlichen zusammenhält. Die Aluminiumfolie kann auch gegebenenfalls schon beim Abwickeln von der Rolle 15 auf eine Temperatur von etwa 600°C vorgeheizt werden, damit die Folie in der Einpreßzone sehr rasch auf ihren Schmelzpunkt erwärmt werden kann. Die beiden Rollen drücken mit einem mechanischen Druck gegeneinander, der ausreicht, die Schicht 2, 14 über einen Teil seiner Dicke D in die erweichte Aluminiumfolie einzupressen. Dabei kann die Metallfolie 3 auch so stark erwärmt werden, daß sie sich stellenweise verflüssigt.

Im weiteren Verlauf des Schichtstapels 4 nach Passieren der beiden gegeneinandergedrückten Rollen liegt eine Schichtelektrode vor, die sich als beidseitig mit einer Schicht 2, 14 beschichtete Metallfolie 3 darstellt (vgl. auch Figur 2).

Weiterhin kann die Schicht 2, 14 aus einem Kohlenstoffmaterial bestehen, das in Form von zu einem Tuch miteinander verwobenen Fasern 16 vorliegt. Andere Ausführungsformen des Kohlenstoffmaterials sind Kohlenstoffpapier bzw. Kohlenstoffvlies, bei denen die Faserrichtung in der Größenordnung von Millimetern senkrecht zur Materialebene im wesentlichen parallel zueinander angeordnet sind, innerhalb der Materialebene aber keine Vorzugsrichtung aufweisen. Die Schicht 2, 14 kann aber auch ein Strang aus nebeneinander in einer Vorzugsrichtung verlaufenden Fasern sein, wobei die Vorzugsrichtung mit der Längsrichtung der Bänder übereinstimmt.

Die in Figur 1 gezeigte Schicht 2 beziehungsweise 14 ist ein Kohlenstofftuch, das aus einer Vielzahl von miteinander verwobenen Fasern 16 zusammengesetzt ist.

Um die Durchdringung der Schichten 2, 14 mit Metall zu verstärken, kann beispielsweise auf der Oberseite der oberen Schicht 2 Aluminiumpulver vor dem Einpressen der Schichten 2, 14 in die Metallfolie 3 aufgebracht werden. Das Metallpulver 11 kann mittels einer Streuvorrichtung 12 aufgebracht werden. Die Streuvorrichtung 12 kann beispielsweise nach der Art eines Pfefferstreuers ausgeführt sein.

Das Metallpulver 11 kann aber ebenso auf der Metallfolie 3 oder sogar auf dem Preßwerkzeug 5 in die Einpreßzone transportiert werden. Das Metallpulver weist Partikel mit einer durchschnittlichen Größe von etwa 5 µm bis 2 mm auf.

Die beiden als Preßwerkzeug 5 beziehungsweise Anschlag 6 verwendeten Rollen weisen jeweils eine zwar gekrümmte aber glatte Oberfläche 7, 8 auf. Dadurch kann erreicht werden, daß bei entsprechender Breite der Rollen die Schicht 2 beziehungsweise, die Schicht 14 über jeweils ihre gesamte Fläche in die Metallfolie 3 eingepreßt wird. Dadurch wird ein optimaler elektrischer Kontakt zwischen der Metallfolie 3 und der Schicht 2 beziehungsweise 14 erzielt.

Die mit den Schichten 2, 14 beschichtete Metallfolie 3 kann quer zur Längsrichtung des Bandes in einzelne Teilstücke zerlegt werden, die anschließend übereinandergestapelt in Kondensatorwickel eines Kondensators ergeben. Die Schichten 2, 14 können eine Breite von beispielsweise ca. 15 cm aufweisen, während die Metallfolie 3 eine Breite von beispielsweise ca. 22 cm aufweist. Dadurch entsteht für die Metallfolie 3 ein Überstand, der in Form eines Anschlußbändchens zu einem Außenanschluß des Kondensators geführt werden kann.

Neben dem Aufheizen des Preßwerkzeugs 5 beziehungsweise des Anschlags 6 kann das Erweichen beziehungsweise Aufschmelzen der Metallfolie 3 auch durch einen elektrischen Strom hervorgerufen werden. Der elektrische Strom kann entweder zwischen Preßwerkzeug 5 und Anschlag 6 oder aber auch zwischen Metallfolie 3 und Preßwerkzeug 5 oder zwischen Metallfolie 3 und Anschlag 6 fließen. Dabei ist es im wesentlichen unerheblich, ob der elektrische Strom zwischen der unbeschichteten Metallfolie 3 links von den beiden Rollen oder ob der elektrische Strom durch die beschichtete Metallfolie 3 rechts von den beiden Rollen fließt. In allen Fällen liegt der höchste elektrische Widerstand des Strompfads an der Kontaktstelle entweder zwischen Preßwerkzeug 5 und Anschlag 6 oder zwischen Aluminiumfolie 3 und Preßwerkzeug 5 beziehungsweise Anschlag 6, so daß dort im wesentlichen die durch den Strom hervorgerufene Wärme erzeugt wird. Durch die Steuerung des Stromes beziehungsweise der anliegenden Spannung kann die in der Heizzone zwischen Preßwerkzeug 5 und Anschlag 6 erzeugte Wärme genau kontrolliert werden.

Eine weitere Möglichkeit, die Metallfolie 3 zu erweichen beziehungsweise aufzuschmelzen, besteht darin, Ultraschallrollen als Preßwerkzeug 5 beziehungsweise Anschlag 6 zu verwenden. Ganz allgemein kann auch auf andere Art und Weise Ultraschalleistung in der Einpreßzone zwischen Preßwerkzeug 5 und Anschlag 6 eingestrahlt werden, wodurch die Metallfolie 3 erweicht beziehungsweise schmilzt.

Die genannten Methoden zum Erweichen der Metallfolie 3 können bei allen möglichen Ausführungsformen von Preßwerkzeug 5 und Anschlag 6 verwendet werden.

Figur 2 zeigt eine mit einer Schicht 2 beziehungsweise 14 beschichtete Metallfolie 3, wie sie aus einem gemäß Figur 1 durchgeführten Verfahren resultiert. Man erkennt, daß die Fasern 16 der Schichten 2, 14 nicht über ihre gesamte Dicke d in die Metallfolie 3 eingepreßt sind. Sie sind lediglich über einen Teil ihrer Dicke d in die Metallfolie 3 eingebettet. Dadurch wird gewährleistet, daß eine ausreichende Oberfläche der Schicht 2, 14 übrigbleibt, die beispielsweise in einem elektrochemischen Doppelschicht-Kondensator zur Darstellung dessen Kapazität mit einem Elektrolyten wechselwirken muß. Eine solche Wechselwirkung wäre nicht möglich, wenn die Schicht 2, 14 beziehungsweise deren Fasern 16 über die gesamte Dicke in die Metallfolie 3 eingepreßt wäre.

Man erkennt zudem, daß innerhalb der Metallfolie 3 ein großflächiger direkter Kontakt zu dem Material der Schicht 2 beziehungsweise 14, also beispielsweise den Fasern 16, hergestellt wird.

Figur 3 zeigt eine mit einer Schicht 2 beschichtete Metallfolie 3, wie sie aus dem in Figur 1 dargestellten Verfahren resultiert in Draufsicht. Die Metallfolie 3 hat eine etwas größere Breite als die Schicht 2, wodurch ein Überstand realisiert wird, der als Anschlußbändchen zur Kontaktierung der Metallfolie 3 mit einem Außenanschluß eines elektrischen Bauelements verwendet werden kann. Aus Figur 3 geht ferner hervor, daß die Schicht 2 über seine gesamte Fläche in die Metallfolie 3 eingepreßt ist, was soviel bedeutet wie, daß der Flächenabschnitt 1 der Gesamtfläche der Schicht 2 entspricht.

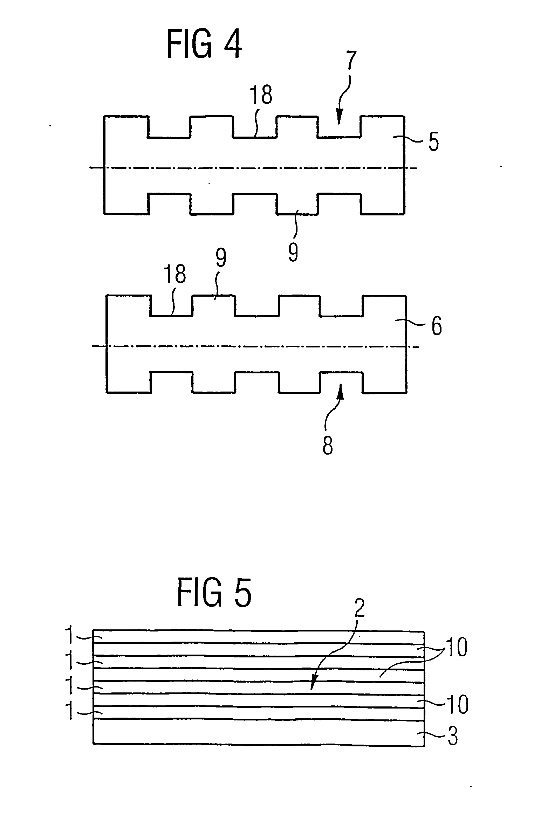

Figur 4 zeigt ein Preßwerkzeug 5 und einen Anschlag 6 wie er in einer Anordnung gemäß Figur 1 verwendet werden kann im Querschnitt. Im Unterschied zu der Darstellung in Figur 1 ist die Oberfläche 7 des Preßwerkzeugs 5 und die Oberfläche 8 des Anschlags 6 nicht glatt sondern mit Erhebungen 9 bzw. Vertiefungen 18 versehen. Diese Erhebungen 9 haben die Form von in Umfangsrichtung um zylinderförmige Rollen umlaufende ringförmige Vorsprüngen. Dabei sind die Erhebungen 9 und die Anordnung von Preßwerkzeug 5 und Anschlag 6 so gewählt, daß eine Erhebung 9 des Preßwerkzeugs 5 auf eine Erhebung 9 des Anschlags 6 trifft. Die Erhebungen 9 des Preßwerkzeugs 5 liegen also deckungsgleich über den Erhebungen 9 des Anschlags 6.

Dasselbe gilt für die Vertiefungen 18. Durch eine Verwendung von Preßwerkzeug 5 beziehungsweise Anschlag 6 gemäß Figur 4 kann erreicht werden, daß die Flächenabschnitte 1 der Schichten 2, 14, die in die Metallfolie 3 eingepreßt werden, durch frei auf der Metallfolie 3 aufliegenden Flächenabschnitten 10 der Schichten 2, 14 voneinander getrennt sind.

Dies ist in Figur 5 dargestellt. Figur 5 zeigt eine mit einer Anordnung gemäß Figur 1 unter Verwendung von Preßwerkzeug 5 und Anschlag 6 gemäß Figur 4 hergestellte beschichtete Metallfolie 3 in Draufsicht. Die Darstellung gemäß Figur 5 entspricht in den Abmessungen der Darstellung in Figur 3. Im Unterschied zur Figur 3 verlaufen nun die Flächenabschnitte 1, bei denen die Schicht 2 in die Metallfolie 3 eingepreßt ist, entlang von Längsbahnen und sind durch weitere Längsbahnen, die frei auf der Metallfolie 3 aufliegende Abschnitte 10 der Schicht 2 repräsentieren, voneinander getrennt. Durch eine solche Anordnung kann erreicht werden, daß die für die Funktion in dem elektrochemischen Bauelement wirksame Oberfläche der Schicht 2 noch vergrößert wird, da die Schicht 2 teilweise gar nicht in die Metallfolie 3 eingebettet ist.

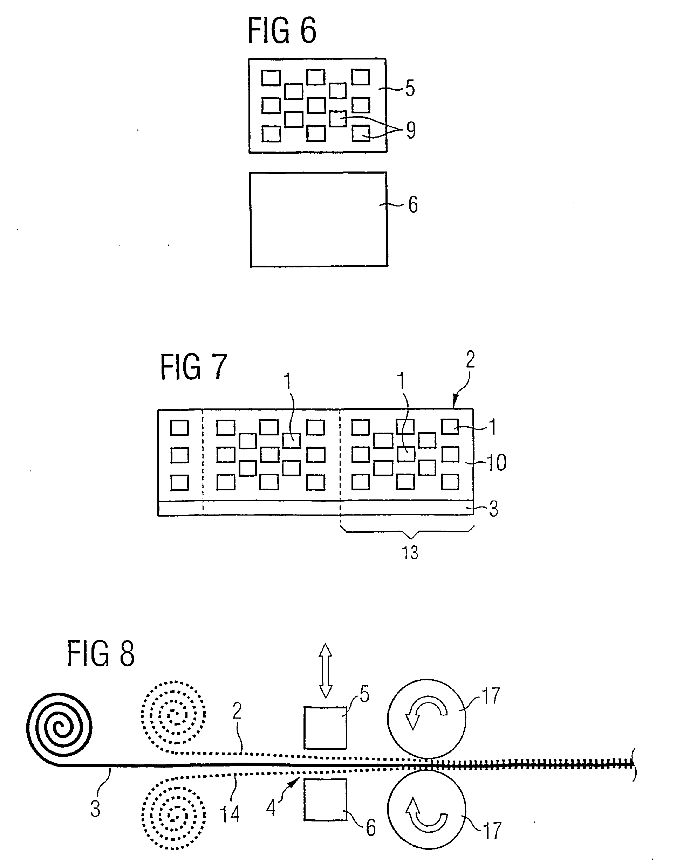

Figur 6 zeigt eine weitere Ausführungsform von Preßwerkzeug 5 beziehungsweise Anschlag 6, wie sie in einer Anordnung zur Durchführung des erfindungsgemäßen Verfahrens gemäß Figur 8 verwendet werden können. Dabei ist jeweils die der Schicht 2 beziehungsweise 14 zugewendete Oberfläche 7, 8 des Preßwerkzeugs 5 beziehungsweise des Anschlags 6 dargestellt. Das Preßwerkzeug 5 ist gekennzeichnet durch eine ebene Oberfläche 7, die Erhebungen 9 in Form von kleinen Würfeln aufweist. Das Gegenstück zum Preßwerkzeug 5, nämlich der Anschlag 6 weist demgegenüber eine glatte, ebene Oberfläche 8 auf. Bei zwischen dem Preßwerkzeug 5 und dem Anschlag 6 liegenden Schichtstapel gemäß Figur 8 und Aufpressen des Preßwerkzeugs 5 gegen den Anschlag 6 resultiert eine beschichtete Metallfolie 3 gemäß Figur 7, wo die beschichtete Metallfolie 3 in Draufsicht dargestellt ist.

Die Anordnung der Erhebung 9 des Preßwerkzeugs 5 sind so ausgelegt, daß alle Fasern 16 mit der Metallfolie 3 kontaktiert werden. Insbesondere für die eindimensional strukturierten Faserstränge ist es wichtig, keine nicht-kontaktierten Fasern 16 entlang der Längsrichtung der Elektrode zuzulassen.

Figur 7 zeigt eine beschichtete Metallfolie 3, mit Abmessungen, die den Darstellungen in Figur 5 beziehungsweise Figur 3 entsprechen. Bei der Durchführung des Verfahrens gemäß Figur 8 wird die Schicht 2 in Längsabschnitten 13 mit der Metallfolie 3 verbunden. Das Einpressen der Schicht 2 in die Metallfolie 3 geschieht jedoch nur an den Orten, an denen sich die Erhebungen 9 des Preßwerkzeugs 5 befinden. An diesen Stellen befinden sich die Flächenabschnitte 1, an denen die Schicht 2 in die Metallfolie 3 eingepreßt ist. An allen übrigen Flächen entstehen Abschnitte 10 der Schicht 2, die frei auf der Metallfolie 3 aufliegen. Die in Figur 7 dargestellte Metallfolie 3 hat dieselben Vorteile wie die in Figur 5 dargestellte Metallfolie 3, jedoch ist der Flächenanteil der eingepreßten Abschnitte der Schicht 2 noch weiter reduziert, wodurch der für die Funktion des Bauelements, beispielsweise für einen Kondensator zur Verfügung stehende aktive Materialanteil der Schicht 2 noch weiter erhöht ist. Beispielsweise kann durch eine beschichtete Metallfolie 3 gemäß Figur 7 ein elektrochemischer Doppelkondensator mit erhöhter Kapazität gegenüber einem Kondensator mit einer beschichteten Metallfolie 3 gemäß Figur 5 realisiert werden.

Figur 8 zeigt eine weitere Anordnung zur Durchführung des erfindungsgemäßen Verfahrens, die der in Figur 1 dargestellten ähnelt. Im Unterschied zu Figur 1 sind als Preßwerkzeug 5 ein quer zur Bandrichtung verfahrbarer und ansonsten ortsfester Stempel und als Anschlag 6 ein feststehender Block verwendet. Da in dieser Anordnung Preßwerkzeug 5 und Anschlag 6 einen Schichtstapel 4 aus mehreren Bändern nicht mehr in Längsrichtung transportieren können, ist es notwendig, eine zusätzliche Bandtransporteinrichtung 17 vorzusehen.

Das Verfahren zur Herstellung einer Schichtelektrode gemäß Figur 8 wird durchgeführt, indem die Bandtransporteinrichtung 17 die übereinanderliegenden Bänder von Schicht 2, Metallfolie 3 und Schicht 14 um einen Längsabschnitt 13 transportiert. Anschließend wird das Preßwerkzeug 5 auf den Anschlag 6 gepreßt, wodurch je nach Ausführung der Oberfläche 7 des Preßwerkzeugs 5 ein mehr oder weniger großer Flächenabschnitt 1 der Schichten 2, 14 in die Metallfolie 3 eingepreßt wird. Anschließend fährt das Preßwerkzeug 5 nach oben, wodurch der Schichtstapel 4 für einen weiteren Transportschritt um einen Längsabschnitt 13 mittels der Bandtransporteinrichtung 17 freigegeben ist. Hierdurch wird ein diskontinuierliches Verfahren zur Verfügung gestellt, bei dem nacheinander Längsabschnitte 13 der Schichten 2, 14 in die Metallfolie 3 eingepreßt werden. Die Bandtransporteinrichtung 17 kann beispielsweise mittels an den Schichtstapel 4 angedrückten Rollen realisiert sein, wie sie auch schon gemäß Figur 1 gezeigt wurden. Im Unterschied zur Figur 1 müssen die Rollen nicht notwendig elektrisch leitend sein, wie es zur Heizung der Metallfolie 3 mittels eines elektrischen Stroms notwendig wäre.

Bei den beschichteten Metallfolien gemäß den Figuren 3, 5 und 7 wird ein unbeschichteter Rand der Metallfolie 3 übriggelassen, der nicht beschichtet wird und der im weiteren Verlauf der Fertigung zur Kontaktierung der Metallfolie 3 an Außenanschlüsse des Kondensators dient.

Neben den in Figur 1 genannten Aluminiumfolien können auch andere Metallfolien, beispielsweise Kupferfolien, eingesetzt werden.

Als Kohlenstofftuch kommt neben den in Figur 1 beschriebenen aus nebeneinanderliegenden Fasern bestehenden Schichten auch Kohlenstoffpapier, Kohlenstoffvlies oder Kohlenstofffilz in Betracht. Im Gegensatz zu den in einem Strang nebeneinander liegenden in einer Vorzugsrichtung verlaufenden Fasern handelt es sich bei dem Papier und bei dem Vlies um ein zweidimensionales Gebilde, während beim Filz Kohlenstofffasern in drei Dimensionen, also in allen drei Raumrichtungen verlaufen.

Die beschriebene Erfindung ist nicht auf elektrochemische Doppelschichtkondensatoren beschränkt, sondern kann ebenso für andere elektrochemische Bauelemente wie Batterien oder unsymmetrische Kondensatoren verwendet werden, bei denen die Ladungsspeicherung durch die Pseudokapazität einer oder beider Elektrodenschichten verwirklicht wird. Demgemäß ist es auch nicht erforderlich, daß die verwendeten Schichten 2 beziehungsweise 14 aktiviertes Kohlenstofffasermaterial enthalten. Die Aktivierung des Kohlenstoffmaterials ist lediglich vorteilhaft für die Verwendung der Schichtelektroden in elektrochemischen Doppelschichtkondensatoren.

Die Erfindung beschränkt sich nicht auf die dargestellten Ausführungsbeispiele, sondern wird in ihrer allgemeinsten Form durch Patentanspruch 1 definiert.

## Patentansprüche

1. Verfahren zur Herstellung einer Schichtelektrode für elektrochemische Bauelemente mit einer auf einer Metallfolie (3) aufliegenden Schicht (2, 14),
wobei zur Herstellung einer Verbindung zwischen der Metallfolie (3) und der Schicht (2, 14) ein Flächenabschnitt (1) der Schicht (2, 14) über einen Teil der Dicke (D) der Schicht (2, 14) in die Metallfolie (3) eingepreßt wird und wobei die Metallfolie (3) während des Einpressens erweicht wird.

2. Verfahren nach Anspruch 1,
wobei eine elementaren Kohlenstoff enthaltende Schicht (2, 14) verwendet wird.

3. Verfahren nach einem der Ansprüche 1 oder 2,
wobei als Metallfolie (3) eine Aluminiumfolie verwendet wird.

4. Verfahren nach einem der Ansprüche 1 bis 3,
wobei ein Schichtstapel (4) mit einer über einer Metallfolie (3) liegenden Schicht (2, 14) zwischen ein Preßwerkzeug (5) und einen Anschlag (6) gelegt wird und wobei das Preßwerkzeug (5) gegen den Anschlag (6) gepreßt wird.

5. Verfahren nach Anspruch 4,
wobei eine glatte Oberfläche (7) des Preßwerkzeugs (5) gegen eine glatte Oberfläche (8) des Anschlags (6) gepreßt wird.

6. Verfahren nach Anspruch 4,
wobei eine Vertiefungen (18) aufweisende Oberfläche (7) des Preßwerkzeugs (5) gegen einen Anschlag (6) gepreßt wird, dessen Oberfläche (8) so gestaltet ist, daß an den Stellen der Vertiefungen (18) die Schicht (2, 14) nicht in die Metallfolie (3) eingepreßt wird.

7. Verfahren nach einem der Ansprüche 1 bis 6,
wobei die Metallfolie (3) in der Nähe des Preßwerkzeugs (5) erweicht wird.

8. Verfahren nach einem der Ansprüche 1 bis 7,
wobei die Metallfolie (3) durch Erwärmen mittels eines erwärmten Preßwerkzeugs (5) oder eines erwärmten Anschlags (6) erweicht wird.

9. Verfahren nach einem der Ansprüche 1 bis 7,
wobei die Metallfolie (3) durch einen durch die Metallfolie (3) fließenden elektrischen Strom erweicht wird.

10. Verfahren nach einem der Ansprüche 1 bis 7,
wobei die Metallfolie (3) durch Einstrahlung von Ultraschall erweicht wird.

11. Verfahren nach einem der Ansprüche 1 bis 10,
wobei vor dem Herstellen der Verbindung zwischen der Schicht (2) und der Metallfolie (3) Metallpulver (11) auf den einzupressenden Flächenabschnitt (1) aufgebracht wird.

12. Verfahren nach einem der Ansprüche 1 bis 11,
wobei auf der Ober- und auf der Unterseite der Metallfolie (3) jeweils eine Schicht (2, 14) mit der Metallfolie (3) verbunden wird, wobei die Schichten (2, 14) zueinander deckungsgleich sind.

13. Verfahren nach einem der Ansprüche 4 bis 12,
wobei als Preßwerkzeug (5) eine zylinderförmige sich um die Zylinderachse drehende Rolle verwendet wird, die auf dem Schichtstapel (4) abrollt.

14. Verfahren nach einem der Ansprüche 1 bis 12,
wobei der Schichtstapel (4) die Form eines Bands aufweist, und wobei als Preßwerkzeug (5) ein quer zur Schicht verfahrbarer Stempel verwendet wird, mit folgenden Schritten:
a) Pressen des Stempels und eines dazwischenliegenden Längsabschnitts (13) des Bandes gegen einen Anschlag (6)
b) Bewegen des Stempels quer zum Band zur Freigabe des Bandes
c) Bewegen des Bandes in Längsrichtung mittels einer Bandtransporteinrichtung (17).

15. Verfahren nach einem der Ansprüche 1 bis 14,
wobei die Herstellung der Verbindung zwischen der Schicht (2, 14) und der Metallfolie (3) bei einem gegenüber der Umgebungsatmosphäre reduzierten Sauerstoffpartialdruck stattfindet.

16. Verfahren nach einem der Ansprüche 1 bis 14,
wobei die Herstellung der Verbindung zwischen der Schicht (2, 14) und der Metallfolie (3) in einer Inertgasatmosphäre stattfindet.

17. Verfahren nach einem der Ansprüche 1 bis 16,
wobei eine Metallfolie (3) mit einer Dicke zwischen 30 und 150 µm verwendet wird.

18. Verfahren nach einem der Ansprüche 1 bis 17,
wobei eine Schicht (2, 14) mit einer Dicke von 100 bis 500 µm verwendet wird.

19. Verfahren nach einem der Ansprüche 1 bis 18,
wobei als Schicht (2, 14) ein Kohlenstoffpapier, Kohlenstoffvlies oder Kohlenstofffilz verwendet wird.

20. Verfahren nach einem der Ansprüche 1 bis 18,
wobei eine Schicht (2, 14) verwendet wird, das aus einer Vielzahl von wenigstens abschnittsweise in einer Vorzugsrichtung nebeneinander verlaufenden Fasern (16) zusammengesetzt ist, und bei der die Fasern (16) durch Haftung miteinander verbunden sind.

21. Schichtelektrode für elektrochemische Bauelemente, bei der ein Flächenabschnitt (1) einer auf einer Metallfolie (3) aufliegenden Schicht (2, 14) in die Metallfolie (3) eingepreßt ist und wobei die Metallfolie (3) während des Einpressens erweicht wird.

22. Schichtelektrode nach Anspruch 21,
bei der die Schicht (2, 14) über ihre Gesamtfläche in die Metallfolie (3) eingepreßt ist.

23. Schichtelektrode nach Anspruch 21,
bei der in die Metallfolie (3) eingepreßten Flächenabschnitte (1) der Schicht (2, 14) durch frei auf der Metallfolie (3) aufliegende Flächenabschnitte (10) voneinander getrennt sind.

## Claims

1. Method for producing a layer electrode for electrochemical components having a layer (2, 14) applied to a metal foil (3),
wherein a connection is produced between the metal foil (3) and the layer (2, 14) by pressing a surface portion (1) of said layer (2, 14) into the metal foil (3) over part of the thickness (D) of said layer (2, 14), and
wherein the metal foil (3) is softened during the pressing-in process.

2. Method according to Claim 1,
wherein a layer (2, 14) containing elemental carbon is used.

3. Method according to either of Claims 1 and 2,
wherein the metal foil (3) used is an aluminium foil.

4. Method according to one of Claims 1 to 3,
wherein a layer stack (4) having a layer (2, 14) lying above a metal foil (3) is placed between a pressing tool (5) and a stop (6), and wherein the pressing tool (5) is pressed against the stop (6).

5. Method according to Claim 4,
wherein a smooth surface (7) of the pressing tool (5) is pressed against a smooth surface (8) of the stop (6).

6. Method according to Claim 4,
wherein a surface (7) of the pressing tool (5), which has depressions (18), is pressed against a stop (6), the surface (8) of which is designed such that the layer (2, 14) is not pressed into the metal foil (3) at the points where the depressions (18) are located.

7. Method according to one of Claims 1 to 6,
wherein the metal foil (3) is softened in the vicinity of the pressing tool (5).

8. Method according to one of Claims 1 to 7,
wherein the metal foil (3) is softened by heating using a heated pressing tool (5) or a heated stop (6).

9. Method according to one of Claims 1 to 7,
wherein the metal foil (3) is softened by an electrical current that flows through said metal foil (3).

10. Method according to one of Claims 1 to 7,
wherein the metal foil (3) is softened by the injection of ultrasound.

11. Method according to one of Claims 1 to 10,
wherein metal powder (11) is applied to the surface portion (1) to be pressed in before the connection is produced between the layer (2) and the metal foil (3).

12. Method according to one of Claims 1 to 11,
wherein a layer (2, 14) is bonded to the metal foil (3) both on the top side and on the bottom side of said metal foil (3), the layers (2, 14) being congruent in relation to one another.

13. Method according to one of Claims 4 to 12,
wherein the pressing tool (5) used is a cylindrical roller which rotates about the cylinder axis and rolls on the layer stack (4).

14. Method according to one of Claims 1 to 12,
wherein the layer stack (4) is in the form of a strip, and wherein the pressing tool (5) used is a ram that can be moved transversely to the layer, comprising the following steps:
a) the ram and an intermediate longitudinal portion (13) of the strip are pressed against a stop (6),
b) the ram is moved transversely to the strip in order to release the strip, and
c) a strip-conveying device (17) is used to move the strip in the longitudinal direction.

15. Method according to one of Claims 1 to 14,
wherein the connection between the layer (2, 14) and the metal foil (3) is produced at an oxygen partial pressure that is reduced with respect to the ambient atmosphere.

16. Method according to one of Claims 1 to 14,
wherein the connection between the layer (2, 14) and the metal foil (3) is produced in an inert gas atmosphere.

17. Method according to one of Claims 1 to 16,
wherein a metal foil (3) having a thickness of between 30 and 150 µm is used.

18. Method according to one of Claims 1 to 17,
wherein a layer (2, 14) having a thickness of from 100 to 500 µm is used.

19. Method according to one of Claims 1 to 18,
wherein carbon paper, carbon nonwoven or carbon felt is used as layer (2, 14).

20. Method according to one of Claims 1 to 18,
wherein use is made of a layer (2, 14) composed of a multiplicity of fibres (16) that extend next to one another at least in certain portions in a preferred direction, and in which the fibres (16) are bonded to one another by adhesion.

21. Layer electrode for electrochemical components,
in which a surface portion (1) of a layer (2, 14) applied to a metal foil (3) is pressed into the metal foil (3), and wherein the metal foil (3) is softened during the pressing-in process.

22. Layer electrode according to Claim 21,
in which the layer (2, 14) is pressed into the metal foil (3) over its entire surface area.

23. Layer electrode according to Claim 21,
in which surface portions (1) of the layer (2, 14) that are pressed into the metal foil (3) are separated from one another by surface portions (10) applied freely to the metal foil (3).

## Revendications

1. Procédé de fabrication d'une électrode stratifiée pour des composants électroniques ayant une couche (2, 14) reposant sur un feuillard (3) métallique,
dans lequel, pour ménager une liaison entre le feuillard (3) métallique et la couche (2, 14), on enfonce une section (1) de surface de la couche (2, 14) sur une partie de l'épaisseur (D) de la couche (2, 14) dans le feuillard (3) métallique et on ramollit le feuillard (3) métallique pendant l'enfoncement.

2. Procédé suivant la revendication 1,
dans lequel on utilise une couche (2, 14), qui comprend carbone élémentaire.

3. Procédé suivant la revendication 1 ou 2,
dans lequel on utilise un feuillard d'aluminium comme feuillard (3) métallique.

4. Procédé suivant l'une des revendications 1 à 3,
dans lequel on met une pile (4) de couches ayant une couche (2, 14) se trouvant au-dessus d'un feuillard (3) métallique entre un outil (5) de presse et une butée (6) et on presse l'outil (5) de presse sur la butée (6).

5. Procédé suivant la revendication 4,
dans lequel on presse une surface (7) lisse de l'outil (5) de presse sur une surface (8) lisse de la butée (6).

6. Procédé suivant la revendication 4,
dans lequel on presse une surface (7), ayant des cavités (18), de l'outil (5) de presse sur une butée (6), dont la surface (8) est conformée de façon à ce que, aux emplacements des cavités (18), la couche (2, 14) ne soit pas enfoncée dans le feuillard (3) métallique.

7. Procédé suivant l'une des revendications 1 à 6,
dans lequel on ramollit le feuillard (3) métallique à proximité de l'outil (5) de presse.

8. Procédé suivant l'une des revendications 1 à 7,
dans lequel on ramollit le feuillard (3) métallique en chauffant au moyen d'un outil (5) de presse chauffé ou d'une butée (6) chauffée.

9. Procédé suivant l'une des revendications 1 à 7,
dans lequel on ramollit le feuillard (3) métallique par un courant électrique passant dans le feuillard (3) métallique.

10. Procédé suivant l'une des revendications 1 à 7,
dans lequel on ramollit le feuillard (3) métallique en y envoyant des ultrasons.

11. Procédé suivant l'une des revendications 1 à 10,
dans lequel on dépose, avant de ménager la liaison entre la couche (2) et le feuillard (3) métallique, de la poudre (11) métallique sur la section (1) de surface à enfoncer.

12. Procédé suivant l'une des revendications 1 à 11,
dans lequel on relie, sur la face supérieure et/ou la face inférieure du feuillard (3) métallique, respectivement une couche (2, 14) au feuillard (3) métallique, les couches (2, 14) étant en coïncidence.

13. Procédé suivant l'une des revendications 4 à 12,
dans lequel on utilise, comme outil (5) de presse, un rouleau de forme cylindrique, qui tourne autour de l'axe du cylindre, et qui roule sur la pile (4) de couches.

14. Procédé suivant l'une des revendications 1 à 12,
dans lequel la pile (4) de couches a la forme d'un ruban et dans lequel on utilise, comme outil (5) de presse, un poinçon pouvant être déplacé transversalement à la couche, comprenant les stades suivants :
a) on presse le poinçon et une section (13) longitudinale interposée du ruban sur une butée (6)
b) on déplace le poinçon transversalement au ruban, pour dégager le ruban
c) on déplace le ruban dans la direction longitudinale au moyen d'un dispositif (17) de transport de ruban.

15. Procédé suivant l'une des revendications 1 à 14,
dans lequel on ménage la liaison entre la couche (2, 14) et le feuillard (3) métallique sous une pression partielle d'oxygène réduite par rapport à l'atmosphère ambiante.

16. Procédé suivant l'une des revendications 1 à 14,
dans lequel on ménage la liaison entre la couche (2, 14) et le feuillard (3) métallique dans une atmosphère de gaz inerte.

17. Procédé suivant l'une des revendications 1 à 16,
dans lequel on utilise un feuillard (3) métallique ayant une épaisseur comprise entre 30 et 150 µm.

18. Procédé suivant l'une des revendications 1 à 17,
dans lequel on utilise une couche (2, 14) ayant une épaisseur de 100 à 500 µm.

19. Procédé suivant l'une des revendications 1 à 18,
dans lequel on utilise comme couche (2, 14) un papier carbone, un non-tissé au carbone ou un feutre au carbone.

20. Procédé suivant l'une des revendications 1 à 18,
dans lequel on utilise une couche (2, 14), qui est composée d'une pluralité de fibres (16) s'étendant, au moins par partie, côte à côte dans une direction préférentielle et
dans lequel on relie les fibres (16) entre elles par adhérence.

21. Electrode stratifiée pour des composants électrochimiques,
dans laquelle une section (1) de surface d'une couche (2, 14) reposant sur un feuillard (3) métallique est enfoncée dans le feuillard (3) métallique et le feuillard (3) métallique est ramolli pendant l'enfoncement.

22. Electrode stratifiée suivant la revendication 21,
dans laquelle la couche (2, 14) est enfoncée sur toute la surface dans le feuillard (3) métallique.

23. Electrode stratifiée suivant la revendication 21,
dans laquelle des sections (1) de surface, enfoncées dans le feuillard (3) métallique, de la couche (2, 14) sont séparées les unes des autres par des sections (10) de surface reposant librement sur le feuillard (3) métallique.
